# EUROPEAN PATENT APPLICATION

(11) **EP 1 582 241 A1**
(43) Date of publication of application: **05.10.2005**
(21) Application number: 05102338.0
(22) Date of filing: 23.03.2005
(51) Int. Cl.: A63F 13/06

(54) **Multi-system game controller that operates in multiple USB modes**

(30) Priority: 31.03.2004 US 816800
(71) Applicant: MICROSOFT CORPORATION, Redmond, WA 98052 (US)
(72) Inventor: Lum, Richard, Redmond, WA 98052 (US); Guo, Wei, Redmond, WA 98052 (US)
(74) Representative: Zimmer, Franz-Josef

(57) **Abstract**

A multi-system game controller is capable of operating in different USB (Uniform Serial Bus) modes so that it may be used with different types of host gaming systems. In the described implementation, the game controller operates in a first USB mode with one set of operating parameters when attached to a first host gaming system, and in a second USB mode with another set of operating parameters when attached to a second host gaming system. The game controller is designed to determine to which host gaming system it is being connected, and to switch to the appropriate USB mode based on the determination.

## Description

### TECHNICAL FIELD

This invention relates to peripherals for controlling games, and more particularly, to game controllers that utilize USB standards and protocols.

### BACKGROUND

Game controllers facilitate user interaction with video games. Game controllers come in many shapes, sizes, and configurations depending upon the desired gaming environment in which the controllers are to be used. There are multi-purpose controllers that have one or more multi-function actuators for controlling a wide range of games. There are also specialty controllers designed for specific genre of games, such as steering wheels for racing games, weapons for shooting games, and navigation sticks for aviation games.

Game controllers are often designed to operate only with one corresponding host gaming system. Some controllers are designed for use only with personal computers, while others are dedicated to various types of console-based systems, such as the Xbox® video game system from Microsoft Corporation, the PlayStation® game system from Sony Corporation, and the GameCube® system from Nintendo of America Inc. It is common for the dedicated controllers to have proprietary plugs that are shaped and sized to fit only associated slots in the consoles, and to utilize proprietary protocols for communication with the consoles. As a result, the controllers have not been traditionally compatible for use with multiple different form factors. The lack of compatibility prevented players from porting his/her game controller from one type of system to another.

Today, more game controllers are being designed to use standardized USB (Uniform Serial Bus) protocols to communicate with the host gaming systems. However, even within the boundaries of USB protocols, there can be different settings and modes of operation that prevent usage across different USB-based systems.

Accordingly, there is a need for improved game controllers that can be utilized in different types of game systems.

### SUMMARY

A multi-system game controller is capable of operating in different USB (Uniform Serial Bus) modes so that it may be used with different types of host gaming systems, such as a PC and a console gaming system. In the described implementation, the game controller operates in a first USB mode with one set of operating parameters when attached to a first host gaming system, and in a second USB mode with another set of operating parameters when attached to a second host gaming system. The game controller is designed to determine to which host gaming system it is being connected, and to switch to the appropriate USB mode based on the determination.

### BRIEF DESCRIPTION OF THE CONTENTS

The detailed description is described with reference to the accompanying figures. In the figures, the left-most digit(s) of a reference number identifies the figure in which the reference number first appears. The use of the same reference numbers in different figures indicates similar or identical items.

Fig. 1 illustrates two different host gaming systems―a personal computer and a game console―and a controller that can be used with both host gaming systems by operating in different USB modes.

Fig. 2 is a block diagram of the game console.

Fig. 3 is a block diagram of the computer.

Fig. 4 is a block diagram of the controller.

Fig. 5 is a flow diagram showing a process for selecting an appropriate USB mode for the controller based upon which of the host gaming systems the controller is connected.

### DETAILED DESCRIPTION

The following disclosure describes a multi-system game controller that can be utilized with different types of game systems, such as a PC and a console-based gaming system, by operating in different USB (Uniform Serial Bus) modes. The game controller determines the type of game system, and then switches to an appropriate USB mode depending upon the determination. The controller switches to a first USB mode when operated with one host gaming system and to a second USB mode when operated with another host gaming system. For discussion purposes, the game controller is described in the context of a multi-purpose game controller. However, the game controller may be configured in many different ways, including specialty controllers, and with a wide variety of shapes, sizes, and functionality.

### Multi-System Gaming Environment

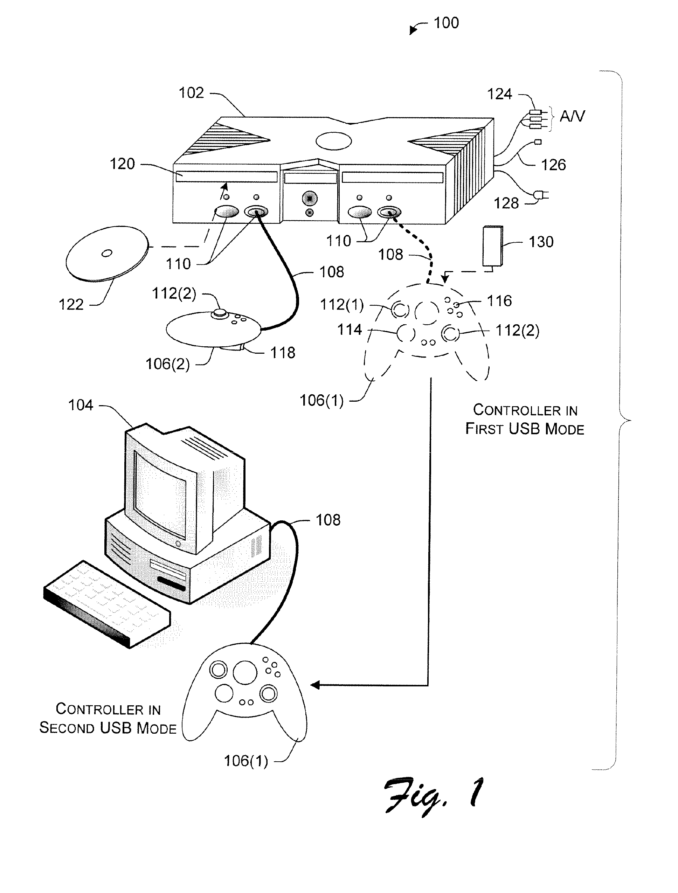

Fig. 1 shows an exemplary multi-system gaming environment 100 in which two types of host gaming systems are illustrated―a game console 102 and a personal computer (PC) 104. Peripheral game controllers 106(1) and 106(2) attach to the host gaming systems 102 and 104 to facilitate player interaction with video games.

Each controller 106 can be coupled to the host gaming system via a wire or wireless interface. In wired operation, the controller 106 is connected to the host gaming system via a cable 108. While connected, the controller derives power from the host gaming system through the cable 108. In wireless operation, the controller is connected to the host gaming system via a wireless link and draws from its own power source, such as a battery. The wireless link may be implemented using any one of many different technologies including, for example, infrared, Bluetooth, or RF technologies. The cable 108 may be optionally detached from the controller to offer more freedom of movement.

In the illustrated configuration, the game console 102 has four slots 110 on its front face to support up to four controllers 106, although the number and arrangement of slots may be modified. For wired operation, the game controllers 106 are assigned to the physical slots 110 for controlling various characters/features of the video game. For wireless operation, the game controllers 106 are assigned to virtual slots. PC 104 supports one or more controllers 106, which can be connected via a cable 108 to a USB port (as shown) or via a wireless link.

Both host gaming systems 102 and 104 support USB protocols. However, even with the boundaries of the USB standards, there are operating parameters that may differ to the extent that controllers configured for play with one type of system cannot be used for play on the other type of system. For example, PC 104 may be configured to support a full-speed USB mode (e.g., USB 2.0, specifying data rates up to 480Mb/s), and the game console 102 may be configured to support a low-speed USB mode (e.g., USB 1.1 or variations thereof, specifying data rates of 12 Mb/s or less).

As described herein, the same controller 106 is designed for use with different types of host gaming systems, including both the game console 102 and the PC 104. One controller 106(1) is shown as being alternately associated with the game console 102 or the PC 104. When associated with the game console 102, the controller 106(1) (illustrated with dashed lines) operates in a first USB mode (e.g., low speed USB 1.1) with a first set of operating parameters supported by the game console 102. When associated with the PC 104, the controller 106(1) (illustrated in full lines) operates in a second USB mode (e.g., full speed USB 2.0 or high speed USB 2.0) with a second set of operating parameters supported by the PC 104.

The player can transport his/her controller 106(1) from one system to another by simply disconnecting the controller from the one system (e.g., game console 102) and reconnecting it to the other system (e.g., PC 104). Disconnection from one system is accomplished by physically unplugging cable 108 or terminating a wireless session. Reconnection to another system is achieved by physically attaching cable 108 to a new game port or a USB port, or performing a discovery and binding process to establish a wireless session. Once reconnected, the controller automatically determines which type of gaming system is attempting communication and establishes the appropriate USB mode.

Each controller 106 may be equipped with any of a wide variety of user interaction mechanisms. As illustrated in Fig. 1, each controller 106 is equipped with two thumbsticks 112(1) and 112(2), a directional or D-pad 114, surface buttons 116, and two triggers 118. These mechanisms are merely representative, and other known gaming mechanisms (e.g., shoulder buttons) may be substituted for and/or added to those shown in Fig. 1.

The game console 102 is equipped with a portable media drive 120 and an optional internal hard disk drive. The portable media drive supports various forms of portable storage media as represented by an optical storage disc 122. Examples of suitable portable storage media include DVD, CD-ROM, game discs, game cartridges, and so forth.

The game console 102 connects to a television or other display (not shown) via A/V interfacing cables 124. A power cable 126 provides power to the game console. The game console 102 may be further equipped with internal or externally added network capabilities, as represented by the cable or modem connector 128 to facilitate access to a network, such as a local area network (LAN) or the Internet. A memory unit (MU) 130 may be inserted into the controller 106 to provide additional and portable storage (as illustrated) or alternatively into the game console 102. Portable memory units enable users to store game parameters and transport them for play on other consoles.

### Game Console 102

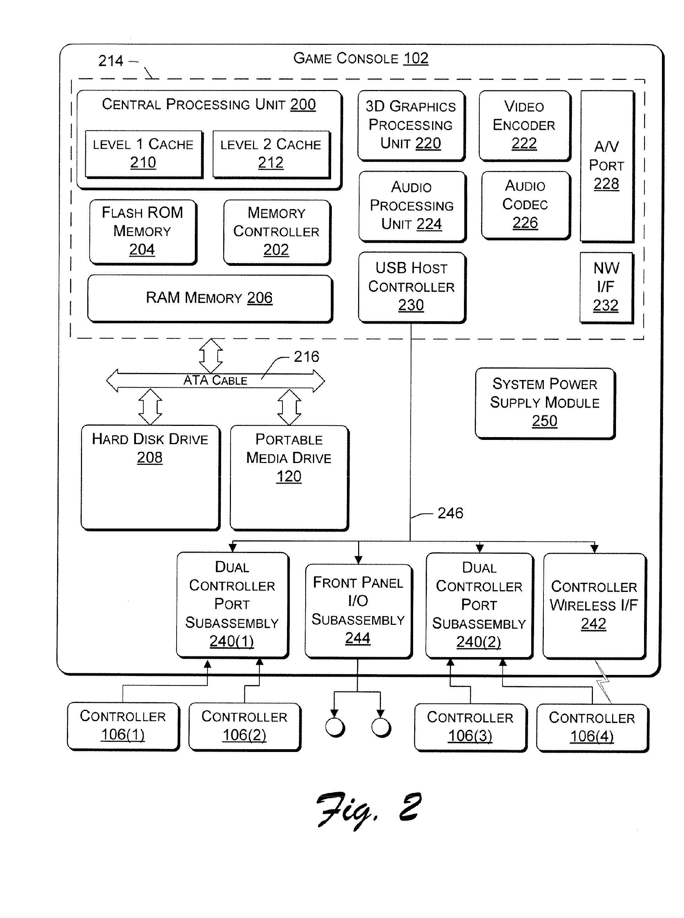

Fig. 2 shows functional components of the game console 102 in more detail. It has a central processing unit (CPU) 200 and a memory controller 202 that facilitates processor access to various types of memory, including a flash ROM (Read Only Memory) 204, a RAM (Random Access Memory) 206, a hard disk drive 208, and the portable media drive 120. The CPU 200 is equipped with a level 1 cache 210 and a level 2 cache 212 to temporarily store data and hence reduce the number of memory access cycles, thereby improving processing speed and throughput.

The CPU 200, memory controller 202, and various memory devices are interconnected via one or more buses, including serial and parallel buses, a memory bus, a peripheral bus, and a processor or local bus using any of a variety of bus architectures. By way of example, such architectures can include an Industry Standard Architecture (ISA) bus, a Micro Channel Architecture (MCA) bus, an Enhanced ISA (EISA) bus, a Video Electronics Standards Association (VESA) local bus, and a Peripheral Component Interconnect (PCI) bus.

As one suitable implementation, the CPU 200, memory controller 202, ROM 204, and RAM 206 are integrated onto a common module 214. In this implementation, ROM 204 is configured as a flash ROM that is connected to the memory controller 202 via a PCI (Peripheral Component Interconnect) bus and a ROM bus (neither of which are shown). RAM 206 is configured as multiple DDR SDRAM (Double Data Rate Synchronous Dynamic RAM) modules that are independently controlled by the memory controller 202 via separate buses (not shown). The hard disk drive 208 and portable media drive 120 are connected to the memory controller via bus 216 (e.g., PCI bus, ATA bus).

A 3D graphics processing unit 220 and a video encoder 222 form a video processing pipeline for high speed and high resolution graphics processing. Data is carried from the graphics processing unit 220 to the video encoder 222 via a digital video bus (not shown). An audio processing unit 224 and an audio codec (coder/decoder) 226 form a corresponding audio processing pipeline with high fidelity and stereo processing. Audio data is carried between the audio processing unit 224 and the audio codec 226 via a communication link (not shown). The video and audio processing pipelines output data to an A/V (audio/video) port 228 for transmission to the television or other display. In the illustrated implementation, the video and audio processing components 220-228 are mounted on the module 214.

Also implemented on the module 214 are a USB host controller 230 and a network interface 232. The network interface 232 provides access to a network (e.g., LAN, Internet, etc.) and may be any of a wide variety of various wired or wireless interface components including an Ethernet card, a modem, a Bluetooth module, a cable modem, and the like. The USB host controller 230 is coupled to the CPU 200 and the memory controller 202 via a bus (e.g., PCI bus) and serves as host for the peripheral game controllers 106(1)-106(4).

In one implementation, the USB host controller 230 follows the USB 1.1 low level electrical signaling and low level protocols, except at a slower clock rate (i.e., less than 12 Mb/s). One example clock rate is approximately 3 Mb/s. The reduced data rate helps reduce EMI radiation. Due to this slow clock rate, the console 102 can be said to operate in low speed USB. The low speed USB is representative of one possible USB mode, although USB modes may be defined by other operating parameters besides data rate.

The game console 102 has two dual controller support subassemblies 240(1) and 240(2), with each subassembly supporting up to two of the game controllers 106(1)-106(4), and a controller wireless interface 242. The wireless interface 242 may use any one of many technologies, including IR, Bluetooth, and RF technologies. A front panel I/O subassembly 244 supports the functionality of control buttons, LEDs (light emitting diodes) or other indicators exposed on the outer surface of the game console. The subassemblies 240(1), 240(2), and 244 and controller wireless interface 242 are coupled to the module 214, and particularly the USB controller 230, via one or more cable assemblies 246.

The game controllers communicate with the USB host controller 230 via the subassemblies 240 and/or the wireless interface 242. One feature of the USB configuration for the console 102 is that a pre-defined unique address can be permanently assigned to each port. The controller attached to that port then utilizes the address assigned to the port as its USB address. This simplifies the device enumeration process, in that upon request from the host console, the controller simply returns one descriptor that contains all controller information. Another feature is that the root hub does not broadcast traffic to all of its ports, but rather enables a port when the console tries to communicate to the controller attached to that port. The port is otherwise disabled when there is no traffic to its device.

The USB interface signal is as follows:

| PIN | Description |
|---|---|
| 1 | +5 V Power |
| 2 | D- Data |
| 3 | D+ Data |
| 4 | Ground |

When a controller 106 is connected to the console 102, the USB host controller 230 sends a request asking the controller to identify itself. Based on this request, the controller 106 can ascertain that the console 102 is attempting to establish communication. The controller switches to the appropriate low-speed USB mode to support communication with the console 102.

The console 102 further includes a system power supply module 250 to supply power to the components of the gaming system 100 and to the game controllers 106.

### PC 104

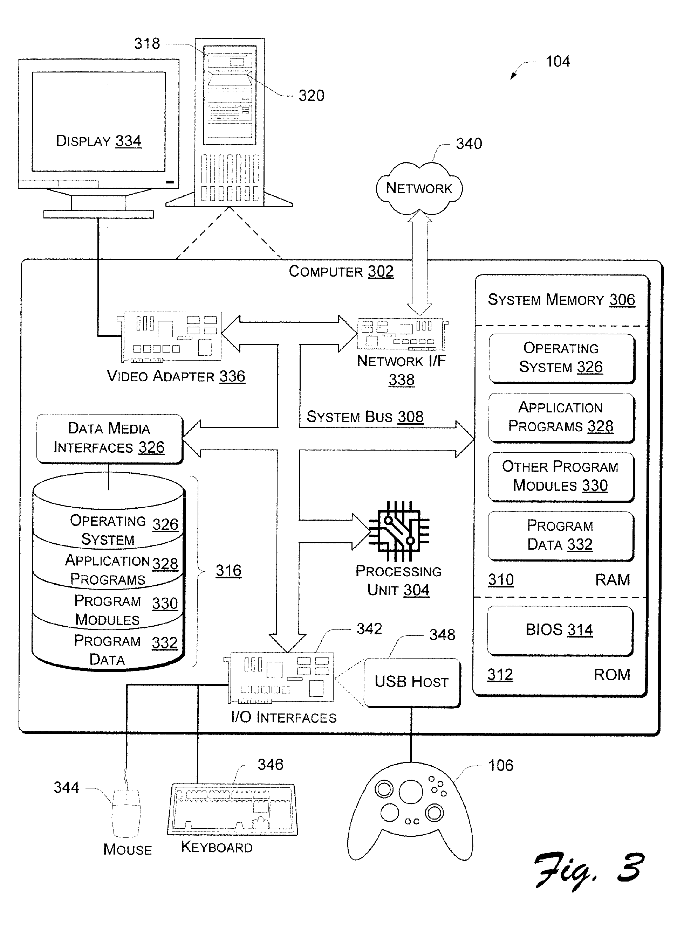

Fig. 3 shows functional components of the PC 104 in more detail. It is noted that PC 104 is just one example of a computing system that can be operated as a host gaming system. Other well known computing systems may also provide gaming environments within which the game controllers 106 may be employed. Examples of such systems include server computers, thin clients, hand-held or laptop devices, multiprocessor systems, microprocessor-based systems, set top boxes, minicomputers, mainframe computers, and the like.

PC 104 includes a general-purpose computer 302 having one or more processing units 304, a system memory 306, and a system bus 308 that couples various system components. The system bus 308 represents one or more of any of several types of bus structures, including a memory bus or memory controller, a peripheral bus, an accelerated graphics port, and a processor or local bus using any of a variety of bus architectures.

The computer 302 typically includes a variety of computer readable media, including volatile and non-volatile media, as well as removable and non-removable media. In the illustrated configuration, the system memory 306 includes computer readable media in the form of volatile memory, such as random access memory (RAM) 310, and non-volatile memory, such as read only memory (ROM) 312. A basic input/output system (BIOS) 314, containing the basic routines that help to transfer information between elements within computer 302, is stored in ROM 312. RAM 310 typically contains data and/or program modules that are immediately accessible to and/or presently operated on by the processing unit 304.

The computer 302 also has a hard disk drive 316, a magnetic disk drive 318 (e.g., floppy disk drive), and an optical disk drive 320 connected to the system bus 308 by one or more data media interfaces 326 or a SCSI interface (not shown). The disk drives and their associated computer-readable media provide non-volatile storage of computer readable instructions, data structures, program modules, and other data for computer 302. It is noted that other types of computer readable media which can store data that is accessible by a computer can also be utilized.

Any number of program modules can be stored on the hard disk 316, magnetic disk 318, optical disk 320, ROM 312, and/or RAM 310. In the illustrated implementation, an operating system 326, one or more application programs 328 (e.g., video game), other program modules 330, and program data 332 (e.g., video game data) are stored on the hard disk drive 316 and/or system memory 306.

The computer 302 includes a display 334 connected to the system bus 308 via a video adapter 336. A network interface 338 provides access to a network 340 (e.g., Internet, intranet, LAN, WAN, etc.) and input/output (I/O) interfaces 342 enable communication with peripheral devices, such as a mouse 344 and a keyboard 346.

The computer is further equipped with a USB host controller 348 to support communication with the game controller 106. When the controller 106 is connected to the USB host 348, the controller 106 operates in the USB mode supported by the USB host controller 348. In one implementation, the USB host controller 348 implements the USB 2.0 electrical signaling and protocols. USB 2.0 specifies a much higher data rate (e.g. 480Mb/s) as compared to the low-speed USB. Due to this high clock rate, the PC 104 can be said to operate in full-speed USB mode, which is representative of another possible USB mode. Alternatively, the PC 104 may be configured to operate in high-speed USB mode.

When the controller 106 is connected to the PC 104, the USB host controller 348 sends a request asking the controller to identify itself. Based on this request, the controller 106 can ascertain that the computer 302 is attempting to establish communication. The controller switches to the appropriate full-speed USB mode (or alternately, high-speed USB mode) to support communication with the PC 104. More particularly, the controller 106 changes state on the D+/D- lines (PINS 2 and 3) and resets the USB connection to operate in the full-speed USB mode (or high-speed USB mode).

### Controller 106

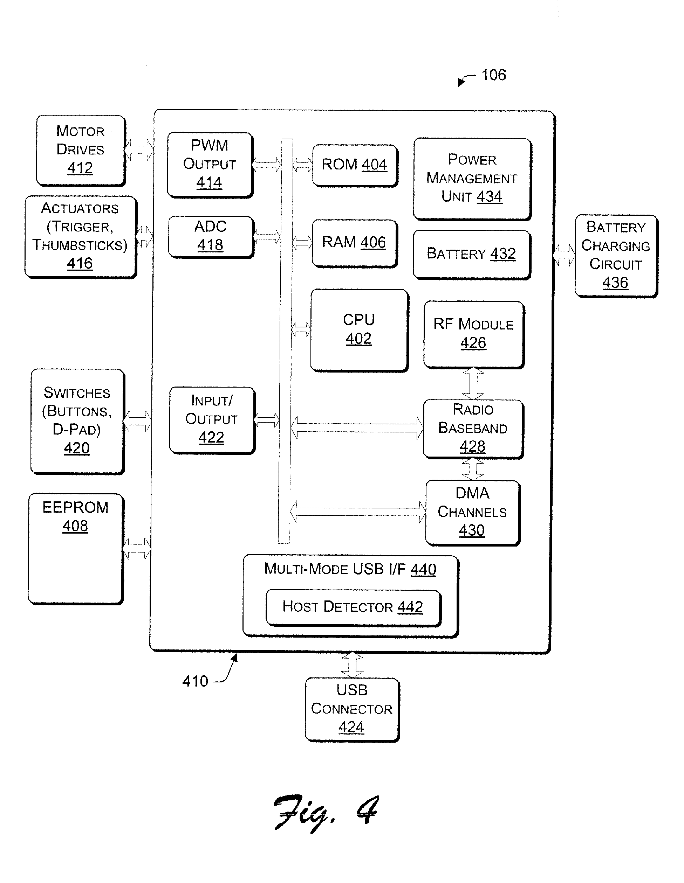

Fig. 4 shows functional components of the game controller 106 in more detail. It has a central processing unit (CPU) 402 and memory, including ROM 404, RAM 406, and EEPROM 408. In the illustrated implementation, the CPU 402, ROM 404, and RAM 406 are integrated onto a common module 410 and are interconnected via one or more bussing structures. EEPROM 408 is separate from, but interfaced with, the module 410.

The game controller 106 includes motor drives 412 to provide tactile feedback to the player and a PWM (pulse width modulation) output 414 to provide the control signals for the motor drives. Player actions received via variable-input actuators 416 (e.g., thumbsticks 112 and triggers 118) are converted to digital signals by analog-to-digital converter (ADC) 418 and passed to the CPU 402. ADC 418 can be implemented, for example, as an eight channel 10-bit or 12-bit converter. Other player actions received through dual-state switches 420 (e.g., D-pad 114 and buttons 116) are passed through I/O 422 to CPU 402.

The game controller can support wired or wireless operation. A USB connector 424 provides a wired interface, while RF module 426 (e.g., 2.4 GHz RF module), radio baseband unit 428, and DMA (Direct Memory Access) channels unit 430 support a wireless interface. In other implementations, the game controller can be designed to utilize alternative wireless technologies, such as IR (infrared), Bluetooth, UWB (UltraWide Band), and so forth. The game controller 104 is equipped with its own power source, such as battery 432, to enable wireless operation by supplying power to the electronic modules and components of the game controller 106. A power management unit 434 provides management for efficient conservation of the battery life. A battery charging circuit 436 recharges battery 432 when the controller is connected via a cable to the host gaming system.

As noted above, the game controller 106 can be used with different host gaming systems that utilize different USB modes, such as low-speed, full-speed, and high-speed USB modes. The game controller 106 includes a multi-mode USB interface 440 that switches among the different modes depending upon the type of gaming system. The USB interface 440 includes a host detector 442 that determines which host gaming system the controller is attempting to communicate with. Upon initial contact (e.g., attaching a cable), the host detector 442 receives a request from the host gaming system asking the controller to identity itself. The host detector uses the request to ascertain which system is asking. Once the host system is discerned, the USB interface 440 switches to the appropriate USB mode. In our example, the USB interface 440 switches to low-speed USB mode if the controller is connected to the console 102 and to full-speed USB mode (or alternately, high-speed USB mode) if the controller is connected to the PC 104. It is noted that although the switching among USB modes is described as occurring upon initial contact or start up, the controller 106 may be configured to make the switch at a later time after start up.

### USB Mode Switching Operation

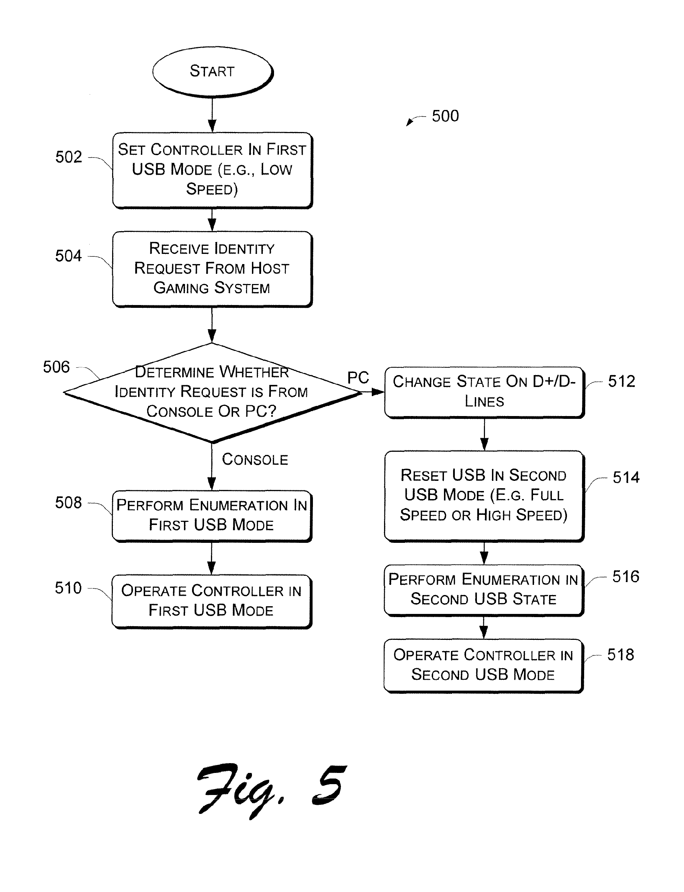

Fig. 5 shows a process 500 for selecting an appropriate USB mode for the controller 106 based upon which of the host gaming systems the controller is connected. The process 500 is illustrated as a collection of blocks in a logical flow graph, which represent a sequence of operations that can be implemented in hardware, software, or a combination thereof. In the context of software, the blocks represent computer instructions that, when executed by one or more processors, perform the recited operations.

The process includes operations performed by a game controller during initial interaction with a host gaming system. For discussion purposes, the process 500 is described with reference to the controller 106, game console 102, and PC 104 described above with respect to Figs. 1-4. It is noted that the process 500 may be implemented by other types of controllers that are designed for wired and/or wireless communication, and for other types of host gaming systems.

At block 502, the game controller 106 is initially set in a first USB mode. As an example, the game controller 106 initially defaults to operate in the low-speed USB mode. As the player connects the controller 106 to a host gaming system, the controller 106 pulls its D+ line high to inform the console that a device has been attached. The game controller 106 then receives a request from the host gaming system asking the controller to identify itself (block 504).

At block 506, the game controller 106 determines whether the identity request originated from a game console 102 or a PC 104. If the request is from the game console 102 (i.e., the "Console" branch from block 506), the game controller 106 is already preset to the first USB mode and hence, the game console 102 can commence enumeration to establish a USB connection using the operating parameters of the first USB mode (block 508). As part of the enumeration process, the controller sends a descriptor to the console. The descriptor contains device information, such as ID, device class, device type, endpoint address, and so forth. Once the connection is established, the controller is operated in the first USB mode to facilitate player interaction with a video game executing on the console 102 (block 510).

On the other hand, if the game controller determines that the identity request is from the PC 104 (i.e., the "PC" branch from block 506), the controller 510 performs a state change on the D+/D- lines (block 512) and resets the USB connection to operate in the second USB mode, such as full speed USB or high speed USB (block 514). The game console 102 performs USB enumeration to establish a USB connection using the operating parameters of the second USB mode (block 516). The controller can then be operated in the second USB mode to facilitate player interaction with a video game executing on the PC 104 (block 518).

Although the switching between USB modes is described as occurring upon initial start up, the switching could take place at a time subsequent to start up.

### Conclusion

The above-described controller is capable of operating in different USB (Uniform Serial Bus) modes so that it may be used in different types of host gaming systems. Although the invention has been described in language specific to structural features and/or methodological acts, it is to be understood that the invention defined in the appended claims is not necessarily limited to the specific features or acts described. Rather, the specific features and acts are disclosed as exemplary forms of implementing the claimed invention.

## Claims

1. A multi-system video game controller for use with different host gaming systems that support different USB modes, the multi-system video game controller comprising:
a communication interface to facilitate communication with the different host gaming systems; and
a USB protocol module to utilize a first USB mode during communication with a first host gaming system and a second USB mode during communication with a second host gaming system.

2. A multi-system video game controller as recited in claim 1, wherein the communication interface comprises an RF module to facilitate wireless communication.

3. A multi-system video game controller as recited in claim 1, wherein the communication interface comprises a serial cable to facilitate wired communication.

4. A multi-system video game controller as recited in claim 1, wherein the first USB mode is low speed USB and the second USB mode is one of full speed USB or high speed USB.

5. A multi-system video game controller as recited in claim 1, wherein the first host gaming system comprises a console-based gaming system and the second host gaming system comprises a personal computer.

6. A multi-system video game controller as recited in claim 1, embodied as a general-purpose controller with one or more multi-function actuators.

7. A video game controller comprising:
a processor;
a memory operatively coupled to the processor; and
a USB module, operatively coupled to the processor, to facilitate communication in a first USB mode when the video game controller is connected to a first host gaming system and to facilitate communication in a second USB mode when the video game controller is connected to a second host gaming system.

8. A video game controller as recited in claim 7, wherein the first USB mode is low speed USB and the second USB mode is one of full speed USB or high speed USB.

9. A video game controller as recited in claim 7, wherein the USB module selects one of the first USB mode or the second USB mode when the game controller is first connected.

10. A video game controller as recited in claim 7, wherein the USB module selects one of the first USB mode or the second USB mode at a time subsequent to when the game controller is connected.

11. A video game controller as recited in claim 7, wherein the first host gaming system comprises a console-based gaming system and the second host gaming system comprises a personal computer.

12. A video game controller as recited in claim 7, wherein the USB module includes a host detector to detect whether the video game controller is connected to the first host gaming system or to the second host gaming system, the USB module automatically switching to the first USB mode if the host detector detects the first host gaming system and to the second USB mode if the host detector detects the second host gaming system.

13. A video game controller as recited in claim 7, further comprising:
a wireless module to support wireless communication; and
a power source to supply power to the processor, the memory, and the wireless module.

14. A video game controller, comprising:
means for determining which of a first host gaming system or a second host gaming system is attempting to establish a USB connection with the video game controller; and
means for utilizing a first USB mode for communication when the video game controller connects with the first host gaming system and a second USB mode for communication when the video game controller connects with the second host gaming system.

15. A video game controller as recited in claim 14, wherein the first USB mode is low speed USB and the second USB mode is one of full speed USB or high speed USB.

16. A video game controller as recited in claim 14, wherein the utilizing means automatically switches to the first or second USB mode depending upon a determination by the determining means.

17. A video game controller as recited in claim 14, further comprising means for communicating with one of the first or second host gaming system over a wireless link.

18. A multi-system video game controller as recited in claim 14, embodied as a general-purpose controller with one or more multi-function actuators.

19. A method comprising:
determining, at a video game controller, whether the video game controller is being operatively connected for communication with a first host gaming system or a second host gaming system;
operating the video game controller in a first USB mode when the video game controller is connected for communication with the first host gaming system; and
operating the video game controller in a second USB mode when the video game controller is connected for communication with the second host gaming system.

20. A method as recited in claim 19, wherein the first USB mode is low speed USB and the second USB mode is one of full speed USB or high speed USB.

21. A method as recited in claim 19, wherein the first host gaming system comprises a console-based gaming system and the second host gaming system comprises a personal computer.

22. A method as recited in claim 19, wherein the determining comprises:
receiving a request to identify the video game controller during initial connection; and
ascertaining which of the first or second host gaming systems the video game controller is being connected to based upon the request.

23. A method as recited in claim 19, further comprising:
setting the video game controller to the first USB mode; and
upon determination that the video game controller is being connected for communication with the second host gaming system, automatically re-setting the video game controller to the second USB mode.

24. One or more computer-readable media comprising computer-executable instructions that, when executed, perform the method as recited in claim 19.
